# EUROPEAN PATENT SPECIFICATION

(11) **EP 1 432 875 B1**
(45) Date of publication and mention of the grant of the patent: **14.04.2010**
(21) Application number: 02775629.5
(22) Date of filing: 24.09.2002
(51) Int. Cl.: E02B 3/26

(54) **FENDER**
FENDER
DEFENSE

(30) Priority: 01.10.2001 SE 0103260
(43) Date of publication of application: 30.06.2004
(73) Proprietor: Trelleborg Industri AB, 231 81 Trelleborg (SE)
(72) Inventor: MALMBERG, Mats, Anders, S- 274 63 Rydsgard (SE); GRÖNVALL, Lars, Göran, Mikael, S-231 55 Trelleborg (SE)
(74) Representative: Milanov, Nina Vendela Maria
(86) International application number: PCT/SE2002/001725
(87) International publication number: WO 2003/029565

(56) References cited:
- EP-A2- 0 135 997
- EP-A2- 0 812 961
- DE-U1- 9 101 735
- US-A- 3 999 497
- US-A- 4 258 641
- US-A- 5 458 077

## Description

### Field of the Invention

The present invention relates to a fender with a fastening end and a shock-absorbing end and, arranged therebetween, at least one deformation portion which is made of an elastically deformable material, especially elastomeric material, and which is arranged, during deformation of the fender, to fold so that surface portions of the deformation portion are folded towards each other as specified in the preamble of claim 1. Such a fender is known eg from US-A-5458077.

### Background Art

Fenders of the type described by way of introduction are used on quays, oil rigs and the like.

Such fenders are known from US 5,458, 077 which describes fenders of different types, which on their inside are provided with thickenings in order to improve the rigidity of the fender.

The fender described in EP 812 961 has similarly been provided with thickenings on its outside or on the inside as well as on the outside.

US 3,999, 497 discloses a cylindrical fender which on the outside of one end has a tubular rubber element. This rubber element prevents, when subjecting the fender to loads, the fender from suddenly losing its rigidity.

EP 135 997 describes a fender which in the outer surface close to its one end is provided with a fold line (slot) to control the deformation of the fender when subjected to loads. As a result, the fender will have a shorter collapsing length and, thus, improved stability.

A drawback of the above-mentioned fenders is that they have unsatisfactory stability when subjected to oblique loads. This is a problem since ships, when berthing, to a great extent strike against the fenders at an oblique angle, which means that the shock-absorbing end of the fender is laterally displaced relative to the fender fastening end which is fixedly secured, for instance, to a quayside.

According to US 3,948, 500, attempts have been made to solve this problem by means of a frustoconical fender with improved lateral stability. However, this fender has very thick walls, which makes the consumption of material great.

### Summary of the Invention

The object of the present invention is to provide a fender which is improved over prior-art technique.

A special object of the invention is to provide a fender with improved deformation properties when subjected to uneven loads.

One more object of the invention is to provide a strong fender with a reduced consumption of material.

According to the invention, these objects are achieved by the fender of the type described by way of introduction being given the features that are evident from claim 1. Preferred embodiments are defined in the dependent claims.

The inventive fender utilises a deformation portion which on at least one surface is provided with projections and recesses arranged in an alternating manner in a direction lateral to the direction of deformation of the fender and of such a shape and location that they can engage with each other in a comblike manner and provide locking of the fender when said surface portions of the deformation portion are folded towards each other during deformation of the fender, which thus cannot be deformed in the lateral direction. As the fender is being deformed, the projections engage in the recesses and provide locking of the fender. Thus, the fender cannot be deformed in the lateral direction and will have improved stability when subjected to oblique loads and shearing load.

According to an embodiment of the invention, the projections and recesses are located on an outwardly directed surface portion of the deformation portion. The projections and recesses may instead be positioned on an inwardly directed surface portion of the deformation portion, or on both an inwardly directed and an outwardly directed surface portion of the deformation portion.

According to an embodiment of the invention, the deformation portion of the fender has first and second conical hollow portions, whose narrow ends are joined with each other, and the projections are arranged with interspaces forming the recesses, the first and second conical portions being arranged relative to each other in such manner that the projections on one frustoconical portion engage in the recesses on the other frustoconical portion. This design makes it possible to provide the desired locking in a simple and safe manner, while at the same time the manufacture of the fender can be made very rational.

In an embodiment of the inventive fender, the first conical portion is made of a material with essentially higher hardness than the second conical portion. This gives the possibility of controlling the deformation of the fender when subjected to loads. The softer conical portion is then pressed together before deformation of the harder conical portion begins.

According to another embodiment, the fender is designed as at least two parallelepipedal fender legs. This is an alternative way of making a strong fender according to the invention.

The parallelepipedal fender legs advantageously have V-shaped projections. During deformation of the fender, the V-shaped projection will engage in the recess between the legs of the V, which ensures a good stabilising locking.

The deformation portion of the fender is preferably made of an elastomeric material, which gives the fender the desired stability and flexibility.

### Brief Description of the Drawings

The invention will now be described in more detail by way of embodiments and with reference to the accompanying drawings.
Fig. 1 is a perspective front view and shows a first embodiment of the fender according to the invention.
Fig. 2 shows the fender in Fig. 1 in a first compressed state.
Fig. 3 shows the fender in Fig. 1 in a second compressed state.
Fig. 4 shows the fender in Fig. 1 in a third compressed state.
Fig. 5 is a plan view and shows a frustoconical portion of the fender in Fig. 1 seen from above.
Fig. 6 is a sectional view and shows a section along line VI-VI in Fig. 5.
Fig. 7 is a perspective view and shows fenders such as the one in Fig. 1 mounted at a quayside.
Fig. 8 is a front plan view and shows a second embodiment of the fender according to the invention.
Fig. 9 is a side plan view and shows a leg of the fender in Fig. 6.
Fig. 10 is a perspective front view and shows the fender in Fig. 6 in a first compressed state.
Fig. 11 shows the fender in Fig. 6 in a second compressed state.
Fig. 12 shows the fender in Fig. 6 in a third compressed state.
Fig. 13 is a perspective side view and shows two cooperating fender legs according to Fig. 7 in a first compressed state.
Fig. 14 is a perspective side view and shows two cooperating fender legs according to Fig. 7 in a second compressed state.
Fig. 15 is a perspective side view and shows two cooperating fender legs according to Fig. 7 in a third compressed state.

### Description of Preferred Embodiments

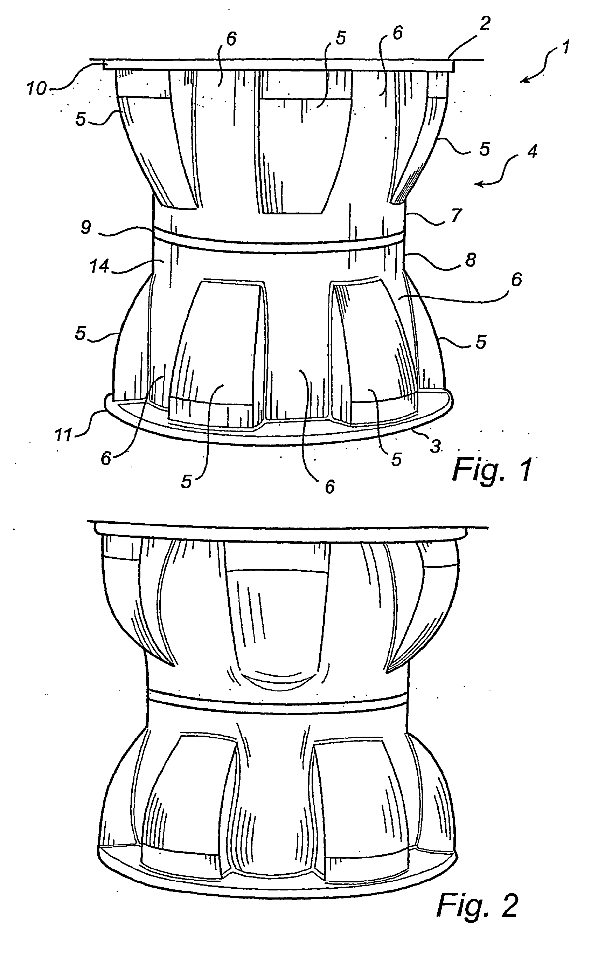

The fender 1 shown in Fig. 1 has a fastening end 2 and a shock-absorbing end 3. A deformation portion 4 extends between the ends 2,3. The deformation portion 4 has a plurality of projections 5 and, arranged therebetween, recesses 6. The deformation portion 4 consists of a first, in the Figure upper, frustoconical hollow portion 7 and a second, in the Figure lower, frustoconical hollow portion 8. At their narrow ends, the conical portions 7,8 can be interconnected by means of a connecting ring 9 or be glued or moulded together. At its wide end, the first conical portion 7 connects to a mounting flange 10. The second conical portion 8 connects correspondingly to a mounting flange 11.

The conical portions 7,8 are moulded in polyurethane. Also other elastomeric materials can be used. Identical moulds can be used for the first and for the second frustoconical portion 7,8, which makes manufacture rational. The mounting flanges 10,11 are moulded together with the respective conical portions 7,8. The mounting flanges 10,11 can also be made with an integrated metal ring. When assembling the fender 1, the two conical portions 7,8 are arranged rotated relative to each other, so that the projections 5 of the first conical portion 7 will be positioned just in front of the recesses 6 of the second conical portion 8 and vice versa. The first conical portion 7 is made of a softer material (about 70 Shore A) than the second conical portion 8 (about 78 Shore A). The materials can also be selected in reverse order or with the same hardness. If different degrees of hardness are selected, the deformation of the fender can be controlled, so that the softer portion is first pressed together before the deformation of the harder portion begins.

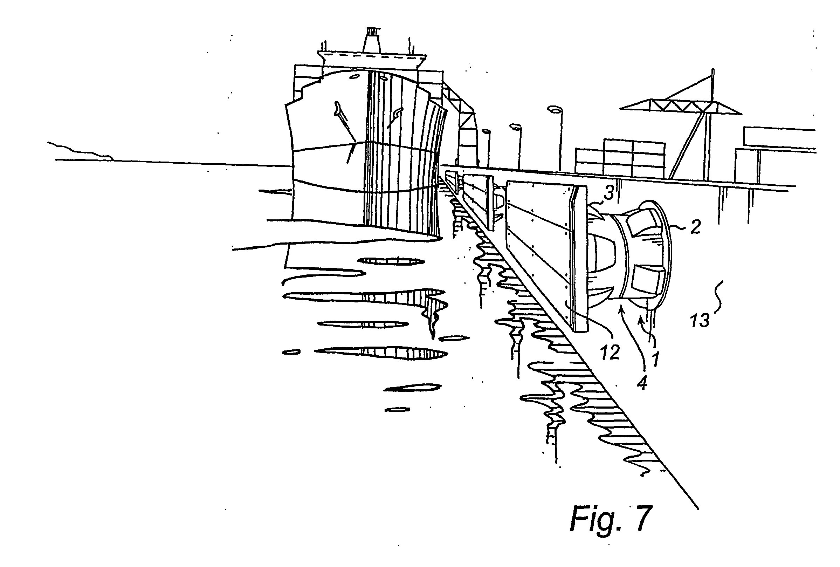

The fender 1 is mounted as shown in Fig. 7 at a quayside 13. The shock-absorbing end 3 is screwed, by means of the mounting flange 10 of the first conical portion 7, to a fender shield 12, and the fender 1 with the fender shield 12 is screwed with its fastening end 2, by means of the mounting flange 11 of the second conical portion 8, to the quayside 13.

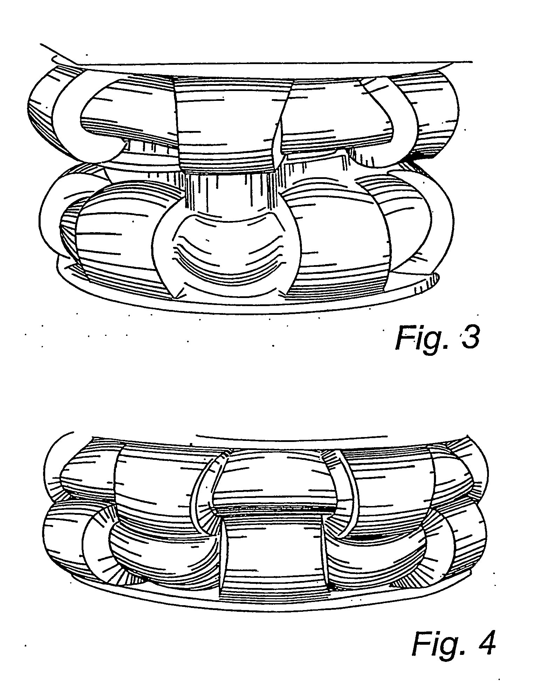

When the fender 1 via the fender shield 12 is subjected to loads exerted by a ship berthing at the quayside 13, the fender 1 is pressed together, as shown in Figs 2-4. Surface portions of the deformation portion are then folded towards each other. Fig. 4 shows how surface portions at the shock-absorbing end 3 of the fender 1 abut against surface portions at the fastening end 2 when the fender 1 has been greatly deformed. Also when subjected to oblique loads, which occurs frequently at quaysides, the fender has good stability since the projections 5 engage in the recesses 6 and provide locking. Therefore the fender 1 is deformed only insignificantly in the lateral direction.

The design of the fender 1 causes the forces exerted thereon to be centered in the centre of the fender 1. Moreover, a longer spring length will be obtained, which results in a strong fender 1 with a reduced consumption of material.

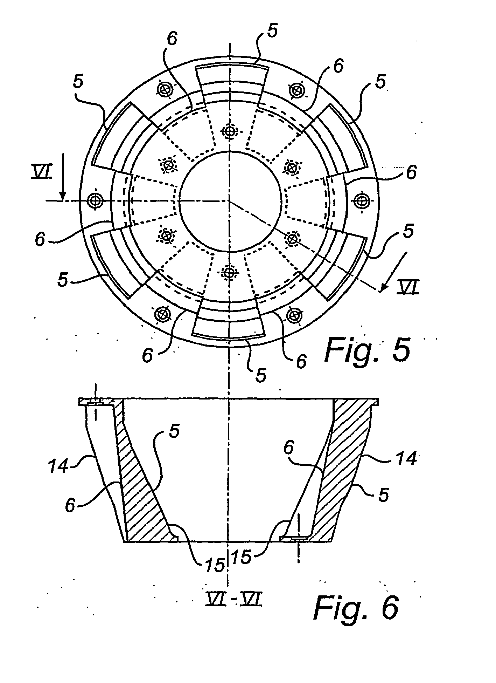

As is evident from Fig. 6, the fender 1 has projections and recesses both on the outwardly directed surface 14 and on the inwardly directed surface 15. Other embodiments are also feasible. For instance, the fender may have a smooth inwardly directed surface 15 and projections and recesses on the outwardly directed surface 14 only. A fender can also be made up of two frustoconical portions which are interconnected at their wide ends. The inwardly directed surface 15 of the fender can then be provided with projections and recesses whereas the outwardly directed surface 14 remain smooth.

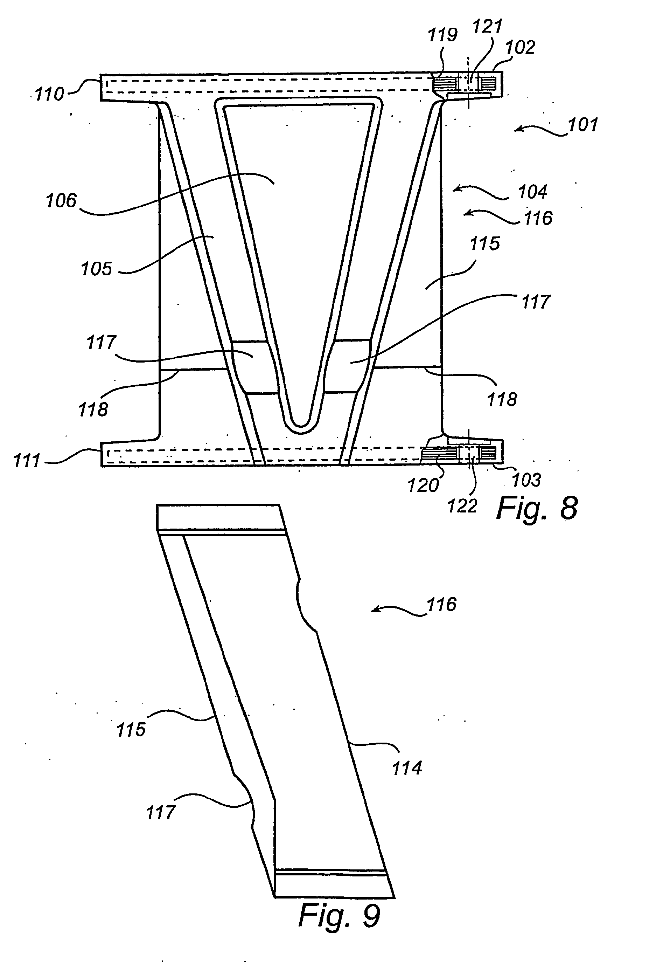

A fender 101 according to another embodiment of the invention is shown in Fig. 8. This fender 101 is formed with two parallelepipedal supporting legs 106, of which one is shown in Fig. 9. The fender 101 can also be formed with more than two fender legs 116. The fender 101 has a fastening end 102 and a shock-absorbing end 103 and, arranged therebetween, a deformation portion 104 with a V-shaped projection 105. A recess 106 is formed between the legs of the projection 105. In each leg, close to the tip of the V, the projection 105 is formed with a recess 117. In the surfaces outside the projection 105, the deformation portion 104 has a fold line 118 level with the recesses 117. At the end which is the upper end in the Figure, the fender 101 has a mounting flange 110 in which a metal plate 119 is positioned. Screw holes 121 for mounting of the fender 101 extend through the outer ends of the flange 110 and the metal plate 119. Correspondingly, there is at the end which in the Figure is the lower end a mounting flange 111 with a metal plate 120 and screw holes 122.

The fender 101 is moulded in urethane rubber, but also other elastomeric materials can be used. During moulding, the metal plates 119,120 are moulded into the mounting flanges 110,111. Then the flanges 110,111 are formed with the screw holes 121,122.

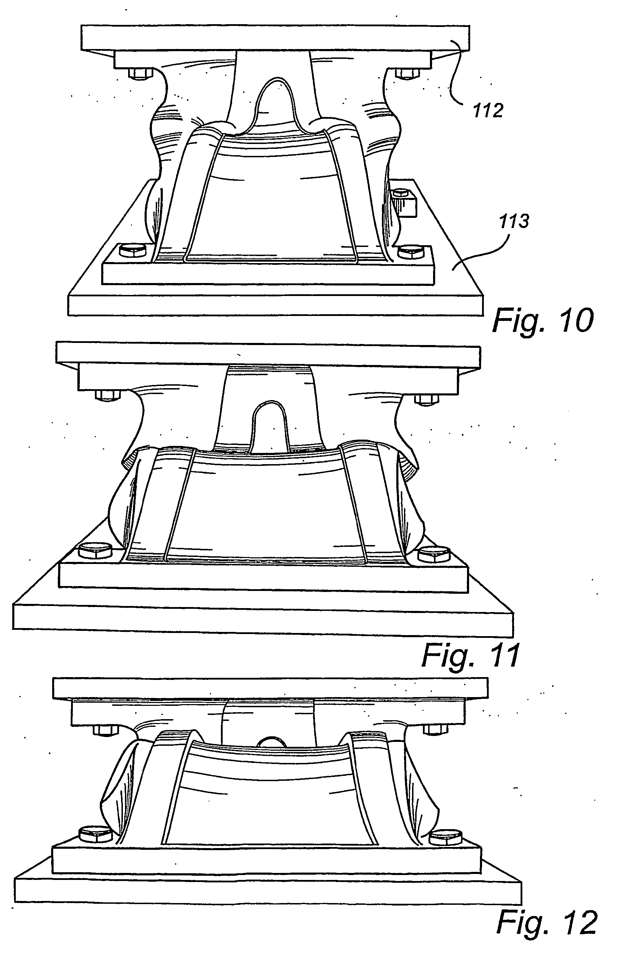

The fender 101 is mounted in the same way as the fender 1 described in connection with Fig. 1, with a fender shield 112 at a quayside 113. As shown in Fig. 9, the fender legs 116 can be mounted with the projection 105 and the recess 106 on an inwardly directed surface 115 or, as shown in Figs 10-12, with the projection 105 and the recess 106 on an outwardly directed surface 114. It is also possible to form fender legs 116 with projections 105 and recesses 106 on both the inwardly directed and outwardly directed surface.

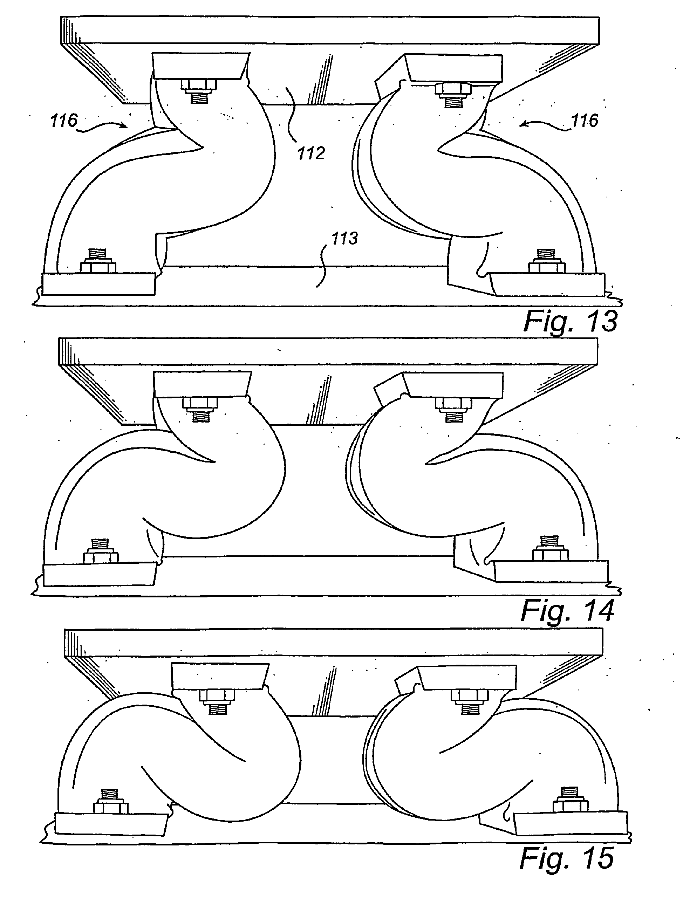

When the fender 101 is subjected to loads exerted by a ship berthing at the quayside, it is pressed together as shown in Figs 10-15. Like in the fender 1 shown in Fig. 1, surface portions of the fender are folded towards each other as the fender is being deformed. The cooperation of the V-shaped projection 105 with the recess 106 between the legs of the V provides locking of the fender 101. Therefore the fender 101 maintains good stability also when subjected to oblique loads.

The recess 117 and the fold line 118 act as fold indication during deformation of the fender 101. The fender 101 can also be formed without the recess 117 and the fold line 118, as is evident from Fig. 10.

Owing to its design, the fender 101 will have an increased spring length, which allows material to be saved, with maintained stability.

In the embodiments described above, urethane rubber and moulding have been used in manufacture. Also other types of elastomeric materials, however, may be used, and as is known to those skilled in the art, the manufacturing method has been adapted to the selected type of elastomeric material. If, for example, mixtures of natural rubber (NR) and/or styrene butadiene rubber (SBR) are used, which is preferred for fender legs according to Figs 8 and 9, manufacture takes place in the traditional manner by the rubber material being supplied to curing moulds and cured in these.

## Claims

1. A fender with a fastening end (2; 102) and a shock-absorbing end (3; 103) and, arranged therebetween, at least one deformation portion (4; 104) which is made of an elastically deformable material, especially elastomeric material, and which is arranged to fold, during deformation of the fender, so that surface portions of the deformation portion (4; 104) are folded towards each other, **characterised in that** the deformation portion (4; 104) on at least one surface has projections (5; 105) and recesses (6; 106) arranged in an alternating manner in a direction lateral to the direction of deformation of the fender and of such a shape and location that they can engage with each other in a comblike manner and provide locking of the fender when said surface portions of the deformation portion (4; 104) are folded towards each other during deformation of the fender, which thus cannot be deformed in the lateral direction.

2. A fender as claimed in claim 1, in which the projections (5; 105) and the recesses (6; 106) are located on an outwardly directed surface (14; 114) of the deformation portion (4; 104).

3. A fender as claimed in claim 1, in which the projections (5,105) and the recesses (6; 106) are located on an inwardly directed surface (15; 115) of the deformation portion (4; 104).

4. A fender as claimed in claim 1, in which the projections (5; 105) and the recesses (6; 106) are located both on an inwardly directed surface (15; 115) and on an outwardly directed surface (14 ; 114) of the deformation portion (4; 104).

5. A fender as claimed in any one of claims 1-4, in which the deformation portion (4; 104) has first and second frustoconical hollow portions (7,8), whose narrow ends are joined with each other, and in which the projections (5) are arranged with interspaces (6) forming the recesses (6), the first and second conical portions (7, 8) being arranged relative to each other in such a manner that the projections (5) on one frustoconical portion (7) have the possibility of engaging in the recesses (6) of the other frustoconical portion (8) during deformation of the fender.

6. A fender as claimed in claim 5, wherein the first frustoconical portion (7) is made of a material with an essentially higher hardness than the second frustoconical portion (8).

7. A fender as claimed in any one of claims 1-4, which has at least two parallelepipedal fender legs (116).

8. A fender as claimed in claim 7, in which the projections (105) are V-shaped.

9. A fender as claimed in any one of the preceding claims, in which at least the deformation portion (4; 104) is made of an elastomeric material.

## Patentansprüche

1. Abweiser mit einem Befestigungsende (2; 102) und einem stoßabsorbierenden Ende (3; 103) und mindestens einem dazwischen angeordneten Verformungsabschnitt (4; 104), der aus einem elastisch verformbaren Material, insbesondere einem elastomeren Material, besteht und der dafür ausgelegt ist, sich während einer Verformung des Abweisers so zusammenzulegen, dass Oberflächenabschnitte des Verformungsabschnitts (4; 104) in Richtung aufeinander zusammengelegt werden, **dadurch gekennzeichnet, dass** der Verformungsabschnitt (4; 104) auf mindestens einer Oberfläche Vorsprünge (5; 105) und Aussparungen (6; 106) aufweist, die abwechselnd in einer seitlichen Richtung zu der Richtung der Verformung des Abweisers angeordnet sind und so geformt und positioniert sind, dass sie einander kammartig in Eingriff nehmen können und den Abweiser verriegeln, wenn die Oberflächenabschnitte des Verformungsabschnitts (4; 104) während der Verformung des Abweisers in Richtung aufeinander zusammengelegt werden, so dass er nicht in der seitlichen Richtung verformt werden kann.

2. Abweiser nach Anspruch 1, wobei die Vorsprünge (5; 105) und die Aussparungen (6; 106) auf einer nach außen weisenden Oberfläche (14; 114) des Verformungsabschnitts (4; 104) angeordnet sind.

3. Abweiser nach Anspruch 1, wobei die Vorsprünge (5, 105) und die Aussparungen (6; 106) auf einer nach innen weisenden Oberfläche (15; 115) des Verformungsabschnitts (4; 104) angeordnet sind.

4. Abweiser nach Anspruch 1, wobei die Vorsprünge (5; 105) und die Aussparungen (6; 106) sowohl auf einer nach innen weisenden Oberfläche (15; 115) als auch auf einer nach außen weisenden Oberfläche (14; 114) des Verformungsabschnitts (4; 104) angeordnet sind.

5. Abweiser nach einem der Ansprüche 1-4, wobei der Verformungsabschnitt (4; 104) erste und zweite kegelstumpfförmige Hohlabschnitte (7,8) aufweist, deren schmale Enden miteinander verbunden sind, und wobei die Vorsprünge (5) Zwischenräume (6) aufweisen, welche die Aussparungen (6) bilden, wobei die ersten und zweiten konischen Abschnitte (7, 8) relativ zueinander so angeordnet sind, dass die Vorsprünge (5) eines kegelstumpfförmigen Abschnitts (7) die Möglichkeit haben, während der Verformung des Abweisers in die Aussparungen (6) des anderen kegelstumpfförmigen Abschnitts (8) einzugreifen.

6. Abweiser nach Anspruch 5, wobei der erste kegelstumpfförmige Abschnitt (7) aus einem Material mit einer wesentlich größeren Härte als der zweite kegelstumpfförmige Abschnitt (8) besteht.

7. Abweiser nach einem der Ansprüche 1-4, der mindestens zwei parallelflachförmige Abweiserbeine (116) aufweist.

8. Abweiser nach Anspruch 7, wobei die Vorsprünge (105) V-förmig sind.

9. Abweiser nach einem der vorangehenden Ansprüche, wobei mindestens der Verformungsabschnitt (4; 104) aus einem elastomeren Material besteht.

## Revendications

1. Défense de quai comportant une extrémité de fixation (2;102) et une extrémité absorbant les chocs (3;103) et, disposée entre celles-ci, au moins une portion de déformation (4;104), qui est constituée d'un matériau déformable élastiquement, notamment d'un matériau élastomère, et qui est agencée afin de plier, pendant la déformation de la défense de quai, de sorte que des portions de surface de la portion de déformation (4;104) soient pliées l'une vers l'autre, **caractérisée en ce que** la portion de déformation (4;104) sur au moins une surface comporte des protubérances (5;105) et des évidements (6;106) disposées en alternance dans une direction latérale à la direction de déformation de la défense de quai et d'une forme et d'un emplacement tels qu'ils puissent venir en prise les uns avec les autres en peigne et fournissent un verrouillage de la défense de quai quand lesdites portions de surface de la portion de déformation (4;104) sont pliées l'une vers l'autre pendant une déformation de la défense de quai, qui ne peut ainsi pas être déformée dans la direction latérale.

2. Défense de quai selon la revendication 1, dans laquelle les protubérances (5;105) et les évidements (6;106) sont situés sur une surface dirigée vers l'extérieur (14;114) de la portion de déformation (4;104).

3. Défense de quai selon la revendication 1, dans laquelle les protubérances (5;105) et les évidements (6;106) sont situés sur une surface dirigée vers l'intérieur (15;115) de la portion de déformation (4;104).

4. Défense de quai selon la revendication 1, dans laquelle les protubérances (5;105) et les évidements (6;106) sont situés à la fois sur une surface dirigée vers l'intérieur (15;115) et sur une surface dirigée vers l'extérieur (14;114) de la portion de déformation (4;104).

5. Défense de quai selon une quelconque des revendications 1 à 4, dans laquelle la portion de déformation (4;104) comporte une première et une seconde portions creuses frustoconiques (7,8), dont les extrémités étroites sont jointes l'une à l'autre, et dans laquelle les protubérances (5) sont agencées avec des interstices d'espacement (6) formant les évidements (6), la première et la seconde portions coniques (7,8) étant disposées l'une par rapport à l'autre d'une manière telle que les protubérances (5) sur une portion frustoconique (7) aient la possibilité de venir en prise avec les évidements (6) de l'autre portion frustoconique (8) pendant la déformation de la défense de quai.

6. Défense de quai selon la revendication 5, dans lequel la première portion frustoconique (7) est constituée d'un matériau avec une dureté essentiellement supérieure à celle de la seconde portion frustoconique (8).

7. Défense de quai selon une quelconque des revendications 1 à 4, laquelle comporte au moins deux pattes de défense de quai (116) parallélépipédiques.

8. Défense de quai selon la revendication 7, dans laquelle les protubérances (105) sont en forme de V.

9. Défense de quai selon une quelconque des revendications précédentes, dans laquelle au moins la portion de déformation (4 ;104) est constituée d'un matériau élastomère.
